(19) **Europäisches Patentamt**
**European Patent Office**
**Office européen des brevets**

(11) **EP 2 137 978 B1**

(12) **EUROPEAN PATENT SPECIFICATION**

(45) Date of publication and mention
of the grant of the patent:
**03.10.2012 Bulletin 2012/40**

(21) Application number: **08750979.0**

(22) Date of filing: **17.04.2008**

(51) Int Cl.:
***H04N 7/26*** *(2006.01)*   ***H04N 7/50*** *(2006.01)*
***H04N 7/36*** *(2006.01)*   ***H04N 7/64*** *(2006.01)*

(86) International application number:
**PCT/IB2008/001242**

(87) International publication number:
**WO 2008/129418 (30.10.2008 Gazette 2008/44)**

(54) **VIDEO CODING METHOD AND DEVICE**

VIDEOKODIERVERFAHREN UND -VORRICHTUNG

PROCÉDÉ ET DISPOSITIF DE CODAGE VIDÉO

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **20.04.2007  FR 0754620**

(43) Date of publication of application:
**30.12.2009  Bulletin 2009/53**

(73) Proprietor: **Canon Kabushiki Kaisha
Ohta-ku
Tokyo (JP)**

(72) Inventors:
• **LE FLOCH, Hervé**
**F-35000 Rennes (FR)**
• **RIOU, Cédric**
**F-35000 Rennes (FR)**

(74) Representative: **Petit, Maxime
Santarelli
14, Avenue de la Grande Armée
BP 237
75822 Paris Cedex 17 (FR)**

(56) References cited:
**EP-A- 1 583 369     WO-A-2006/123307
US-A- 5 793 895     US-A1- 2003 031 128**

• **FUKUNAGA S ET AL: "Error resilient video
coding by dynamic replacing of reference
pictures" GLOBAL TELECOMMUNICATIONS
CONFERENCE, 1996. GLOBECOM '96.
'COMMUNICATIONS: THE KEY TO GLOBAL
PROSPERITY LONDON, UK 18-22 NOV. 1996,
NEW YORK, NY, USA,IEEE, US, vol. 3, 18
November 1996 (1996-11-18), pages 1503-1508,
XP010220270 ISBN: 0-7803-3336-5**
• **STEINBACH E ET AL: "STANDARD COMPATIBLE
EXTENSION OF H.263 FOR ROBUST VIDEO
TRANSMISSION ON MOBILE ENVIRONMENTS"
IEEE TRANSACTIONS ON CIRCUITS AND
SYSTEMS FOR VIDEO TECHNOLOGY, IEEE
SERVICE CENTER, PISCATAWAY, NJ, US, vol. 7,
no. 6, December 1997 (1997-12), pages 872-881,
XP000199011 ISSN: 1051-8215**

**Description**

The present invention concerns a video coding method and device. It applies in particular to the compression of a video signal with a view to its transmission or storage.

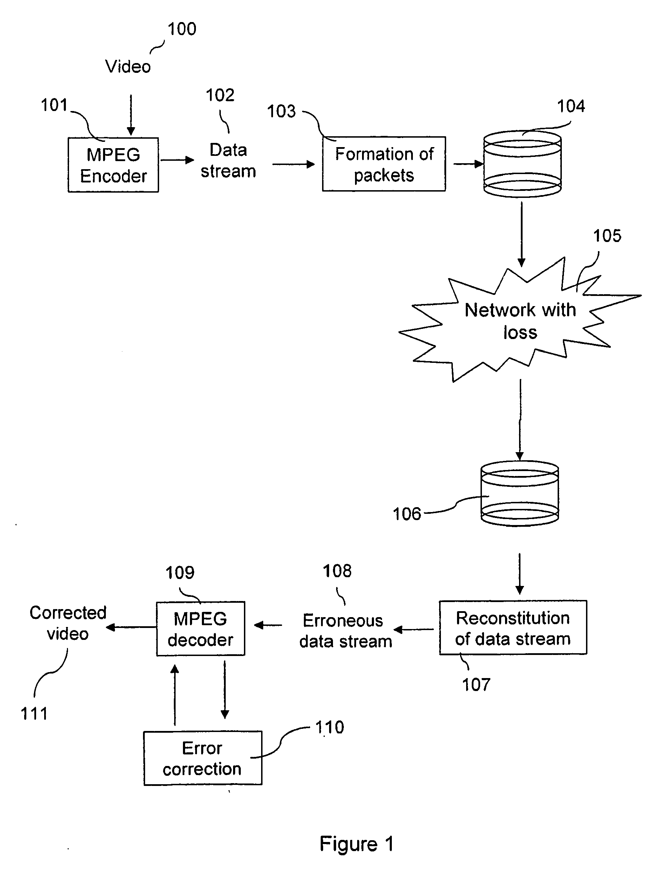

The invention relates in particular to the problem of the correction of losses due to video transmission errors on a network. The context of the invention can be more easily understood from figure 1. In this figure, an initial video 100 is compressed by a video encoder 101 in order to be transmitted over a network 105. This video encoder 101 may be an MPEG1, 2, 4, or H264 encoder (MPEG is the acronym for 'Moving Picture Experts Group' meaning moving picture experts group). The flow of binary data, or 'bitstream' 102 obtained is divided into packets 103 before being temporarily stored in a buffer memory or 'buffer' 104. The packets are then transported via the network 105, this network not totally guaranteeing resistance to errors. Some packets may thus be lost even if packet protection methods are implemented at the network 105. These mechanisms may for example be error correction codes integrated in the packets. In this case, if the redundancy level of these codes is too low compared with the losses, parts of the bitstream cannot be recovered.

After the packets are received and put in the buffer 106 and the bitstream 108 is reconstituted 107, the latter may therefore contain errors. These errors are detected and located on decoding 109 and an error concealment, or correction, module 110 is responsible for correcting them. The error concealment module 110 may be located in the decoder, before the decoder or even before the reconstitution of the bitstream. In the present case, the error concealment module 110 is located at the decoder. This error concealment module 110 uses the non-erroneous information (spatial and/or temporal) available at the decoder to reconstruct the damaged regions. After concealment, the reconstructed video 111 is available for being displayed or stored. The quality of the reconstructed video 111 depends greatly on the reconstruction methods used in the error concealment module 110.

It should be noted that the error concealment module is often imperfect and only partially corrects the lost region of the video. It is a case in fact of spatial and/or temporal interpolation methods. It should also be noted that the bitstream is composed of two types of picture: so called 'INTRA' pictures that are encoded independently of the other pictures and so called 'INTER' pictures which are, to simplify, composed of a vector field allowing the prediction of this picture according to the picture previously encoded/decoded and a prediction error describing the difference between the predicted picture and the real picture. Given the temporal dependence between two INTER pictures, a reconstruction error on a region located in a picture may have an impact on the successive pictures that depend on the first.

A known way of stopping the error propagation is to regularly insert INTRA blocks in an encoded picture. These INTRA blocks are coded independently of the previous picture. Because of this, they can stop the propagation of a transmission error poorly corrected by the error concealment module 110. However, the coding of these INTRA blocks is less effective and their number must be limited in order to avoid having to transmit excessively large pictures. In the same way, certain regions of the picture may be better protected by using other protection modes, for example correction or retransmission codes. However, these protection codes require a higher transmission rate.

There is known, from the document EP 1583369, an INTRA refreshing method whose decision depends on a measurement made on the motion vectors of the blocks around the lost region. This method assumes that the error correction algorithm is based on the estimation of the motion vectors of the lost region according to the motion vectors in the vicinity of this region. The error correction will be all the more effective, the lower the correlation between the adjacent vectors. Considering this hypothesis, INTRA refreshing is favored for blocks where the correlation between the motion vectors in the vicinity is low.

This method has many drawbacks. This method requires the detection of a sensitive region according to the type of error correction performed on decoding (in this patent, it is presupposed that the error correction technique uses the motion vectors adjacent to the lost region). In addition, this method causes the detection of so called 'overlap' regions', that is to say regions in which a background element is progressively masked by a foreground element, regions that have only very little visual impact in the event of loss. Detecting these regions in the context of increased protection therefore proves to be of low effectiveness.

The present invention aims to remedy these drawbacks.

To this end, the present invention relates, according to a first aspect, to a video coding method that comprises:

- a step of determining a motion vector for each of a plurality of blocks of a picture from a reference picture,
- a step of selecting at least one first block in said plurality of blocks, according to the difference between a first motion vector and a second motion vector, wherein:

  - the first motion vector is the motion vector associated with said first block, and
  - the second motion vector is a motion vector relating to a second block, which second block is located in the same picture as the first block at a position relative to the first block determined by the first motion vector,

- a step of coding at least one non-selected block with a first coding mode, and
- a step of coding at least one first selected block with a second coding mode different from the first coding mode.

It will be observed that a region of the picture can consist of a block or a set of blocks, for example in the form of a slice used during the formation of packets. By virtue of these provisions, blocks for which a transmission error would have more repercussions on the quality of the picture obtained after decoding can be coded differently from the other blocks. Moreover, contrary to the prior art, the method that is the object of the present invention makes it possible not to detect the overlap regions and the homogeneous motion regions which have only a little visual impact in the event of loss. The method that is the object of the present invention therefore detects better the blocks liable to have a high visual impact in the event of loss. The invention thus makes it possible to detect the regions of the picture to be coded where there is a significant risk of degradation occurring taking account of the motion information available to the encoder. Once detected, these regions can be better protected in order to avoid propagation of this degradation.

According to particular characteristics, the characteristic relating to the second block is a motion vector, referred to as the 'second', associated with the second block.

By virtue of these provisions, in order to determine the blocks presenting a risk of error propagation, the value between a vector of a predicted block and the values of the predictor block of the picture currently being processed are compared. It should be noted that, contrary to the prior art, the blocks considered are not necessarily adjacent.

According to particular characteristics, during the selection step, the first block is selected if the first and second vectors differ by a distance greater than a predetermined value.

This is because, if the values of these motion vectors are different, this indicates the presence of a break in motion and the block then risks being a source of error propagation.

According to particular characteristics, during the selection step, a first block is selected if at least one absolute value of the differences between the components of the first and second vectors is greater than the said predetermined value.

By virtue of these provisions, the determination of the distance is particularly rapid.

According to particular characteristics, during the selection step, a first block is selected according to a number called the 'state', which is a function of the state of the block having, in a previous picture, the position of the second block, and incremented according to the second motion vector.

By virtue of these provisions, the risk of unnecessary detections is reduced by awaiting the confirmation, on several successive pictures, of the existence of this risk.

According to particular characteristics, the second block vector is determined as being the previously determined vector associated with the block of the picture whose surface common with the second block is the greatest.

These provisions resolve the case where the first vector projects the first block onto several blocks of the picture.

According to particular characteristics, the characteristic relating to the second block is its position and, during the selection step, the first block is selected when the second block is, at least partially, outside the picture.

In this way propagations of errors relating to extrapolated blocks situated outside the picture are avoided.

According to particular characteristics, during the selection step, a first block is selected according to a number, called the 'state', which is a function of the state of the block having, in a previous picture, the position of the first block, and incremented according to the second motion vector.

By virtue of these provisions, the risk of unnecessary detections is reduced by awaiting the confirmation, on several successive pictures, of the existence of this risk.

According to particular characteristics, during the step of coding each selected block, each selected block is encoded, in a manner more robust to transmission errors than the non-selected blocks.

It should be noted that a more robust coding can consist of an INTRA coding, an addition of error correction codes or a multiple transmission of the coded block.

According to particular characteristics, the second coding mode is an INTRA coding mode.

According to particular characteristics, during the selection step the selection of adjacent blocks is prevented.

According to particular characteristics, the second coding mode is an INTER coding mode associated with a level of error correction codes greater than the level used in the first coding mode.

According to particular characteristics, during the selection step, only a number of blocks lower than a predetermined limit value are selected, according to a criterion that is a function of the first and second vectors.

This embodiment is particularly adapted to coding without notification of loss of packets by the decoder.

According to particular characteristics, during the coding step, a block selected with the second mode is coded only if said block is indicated as, at least partially, lost by a decoder.

Each of these provisions makes it possible to reduce the number of blocks coded with the second coding mode, which are generally more expensive in terms of resources or quantity of information remaining after coding.

According to a second aspect, the present invention relates to a video coding method, that comprises:

- a step of determining a motion vector for each of a plurality of blocks of a picture from a reference picture,
- a step of selecting at least one first block, from the plurality of blocks, if a second block located in the same picture as the first block at a position relative to the first block determined by the motion vector associated with said first block, is at least partially outside the picture,
- a step of coding at least one non-selected block with a first coding mode, and
- a step of coding at least one first selected block with a second coding mode different from the first coding mode.

According to a third aspect, the present invention relates to a video coding device that comprises:

- a means of determining a motion vector for each of a plurality of blocks of a picture from a reference picture,
- a means of selecting at least one first block in said plurality of blocks, according to the difference between a first motion vector and a second motion vector, wherein:

  - the first motion vector is the motion vector associated with said first block, and
  - the second motion vector is a motion vector relating to a second block, which second block is located in the same picture as the first block at a position relative to the first block determined by the first motion vector,

- a means of coding at least one non-selected block with a first coding mode, and
- a means of coding at least one first selected block with a second coding mode different from the first coding mode.

According to a fourth aspect, the present invention relates to a video coding device that comprises:

- a means of determining a motion vector for each of a plurality of blocks of a picture from a reference picture,
- a means of selecting at least one first block, from the plurality of blocks, if a second block located in the same picture as the first block at a position relative to the first block determined by the motion vector associated with said first block, is at least partially outside the picture,
- a means of coding at least one non-selected block with a first coding mode, and
- a means of coding at least one first selected block with a second coding mode different from the first coding mode.

According to a fifth aspect, the present invention relates to a computer program that can be loaded into a computer system, said program containing instructions for implementing the coding method as succinctly disclosed above.

According to a sixth aspect, the present invention relates to an information medium that can be read by a computer or a microprocessor, removable or not, storing instructions of a computer program, characterized in that it allows the implementation of the coding method as succinctly disclosed above.

The advantages, aims and characteristics of the method according to the second aspect of the present invention, of these devices, of this program and of this information medium being similar to those of the coding method that is the object of the first aspect of present invention, as succinctly disclosed above, they are not repeated here.

Other advantages, aims and characteristics of the present invention will emerge from the following description given, for an explanatory and in no way limiting purpose, with regard to the accompanying drawings, in which:

- figure 1 depicts schematically a system for video transmission over a network,
- figure 2 depicts schematically a particular embodiment of the device that is the object of the present invention,
- figures 3 to 5 depict, on a schematic picture, blocks, motion vectors and regions used in a particular embodiment of the method that is the object of the present invention,
- figure 6 depicts schematically the conditions for selection of a block in a particular embodiment of the method that is the object of the present invention,
- figure 7 depicts schematically a picture in which there exists a source of risks of errors used in an embodiment of the method that is the object of the present invention,
- figure 8 depicts schematically a method of selecting a particular region used in variant embodiments of the method that is the object of the present invention,
- figure 9 depicts schematically a change in states of blocks used in variant embodiments of the method that is the object of the present invention, and
- figure 10 depicts, in the form of a logic diagram, steps implemented in a particular embodiment of the method that is the object of the present invention.

Throughout the description, the term 'error correction' corresponds to the technique known by the term 'error concealment' aimed at restoring a damaged picture block rather than the use of error correction codes integrated in a packet of transmitted data.

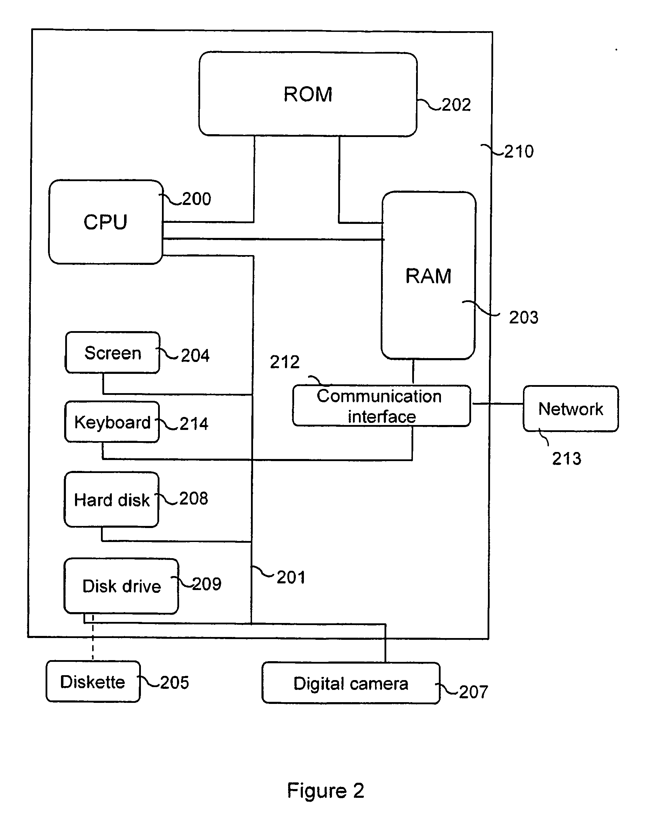

As shown in figure 2, a device implementing the invention is for example a microcomputer 210 connected to various peripherals, for example a digital camera 207 (or a scanner, or any picture acquisition or storage means) connected to a graphics card and supplying information to be processed by the implementation of the present invention.

The device 210 comprises a communication interface 212 connected to a network 213 able to transmit digital data to be processed or conversely to transmit data processed by the device. The device 210 also comprises a storage means 208 such as for example a hard disk. It also comprises a reader 209 for a disk 205. This disk 205 may be a diskette, a CD-ROM or a DVD-ROM for example. The disk 205, like the disk 208, can contain data processed according to the invention as well as the program or programs implementing the invention which, once read by the device 210, will be stored on the hard disk 208. According to a variant, the program enabling the device to implement the invention can be stored in read-only memory 202 (referred to as ROM in the drawing). In a second variant, the program can be received so as to be stored in an identical fashion to that described previously by means of the communication network 213.

This same device has a screen 204 for displaying the data to be processed or serving as an interface with the user, who can thus parameterize certain processing modes, by means of the keyboard 214 or any other means (a mouse for example).

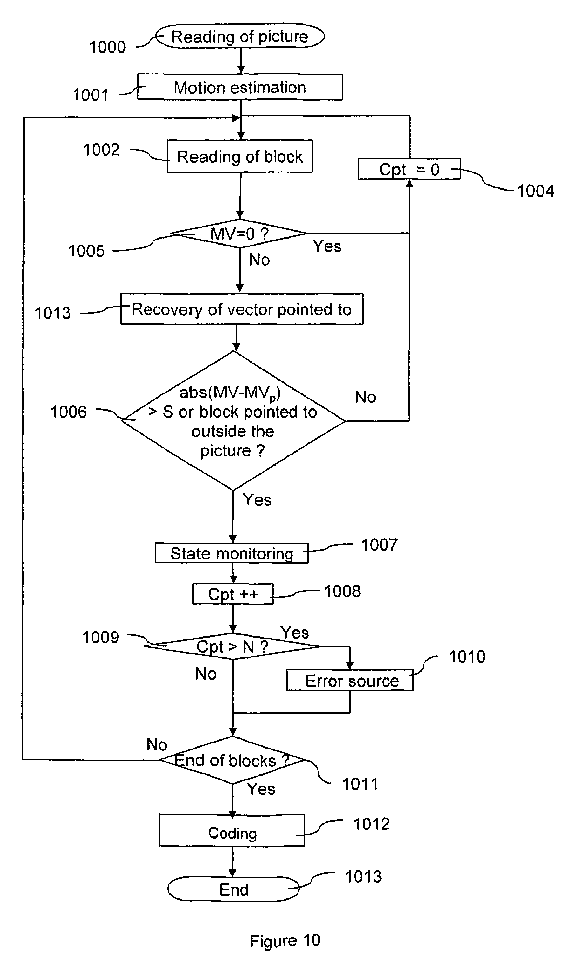

The central unit 200 (referred to as CPU in the drawing) executes the instructions relating to the implementation of the invention, instructions stored in the read-only memory 202 or in the other storage elements. For example, the central unit performs the steps illustrated in figure 10. On powering up, the processing programs stored in a non-volatile memory, for example the ROM 202, are transferred into the random access memory RAM 203, which will then contain the executable code of the invention as well as registers for storing the variables necessary for implementing the invention.

In more general terms, an information storage means that can be read by a computer or a microprocessor, integrated or not into the device, possibly removable, stores a program implementing the video coding method according to the invention.

The communication bus 201 affords communication between the various elements included in the microcomputer 210 or connected to it. The representation of the bus 201 is not limiting and in particular the central unit 200 is able to communicate instructions to any element of the microcomputer 210 directly or by means of another element of the microcomputer 210.

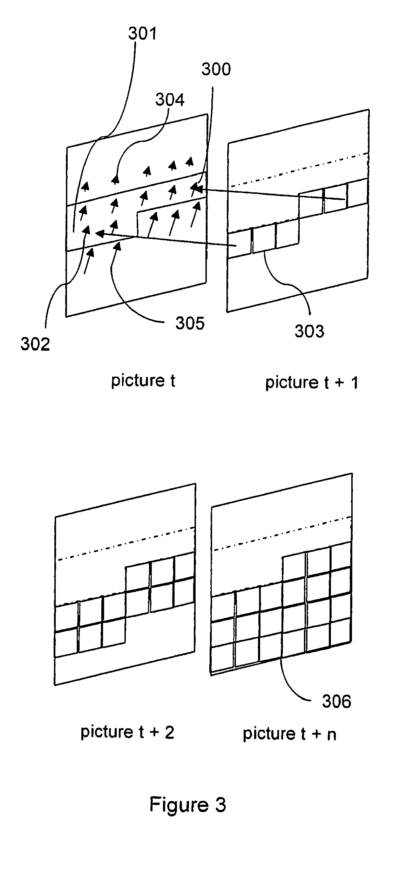

Figure 3 illustrates the phenomenon of error propagation. In accordance with the present invention, it is sought to detect the most important regions of the picture in the event of loss, the importance here relating to a visual impact in the event of loss and approximate correction. Let Pi(t) be a lost region 300 on the picture t, t representing the incremental number of the coded picture. An error correction algorithm makes it possible to reconstruct this region. It is assumed here that the picture on which the loss is located is an INTER picture. The decoding of an INTER picture consists of projecting the luminance of the picture previously reconstructed and adding the prediction error. Losing the region Pi(t) means that the motion vectors and the prediction error have been lost. Because of this, the error correction may mean reconstructing a set of motion vectors. This is the case in our example, the error correction being based on the interpolation of the available motion vectors 304 and 305. However, the interpolation does not make it possible to correctly reconstruct the missing vector field 302, the motion vectors of which are used to copy part of the luminance of the previous picture on the lost region. Consequently a reconstruction error Ei(t) 301 located on the reconstructed region of the picture t exists.

If blocks Bi(t+1) 303 of the following picture are predicted from this region, the error is propagated on these blocks Bi(t+1). This propagation can then extend over a major part 306 of the picture to the $n^{th}$ following picture.

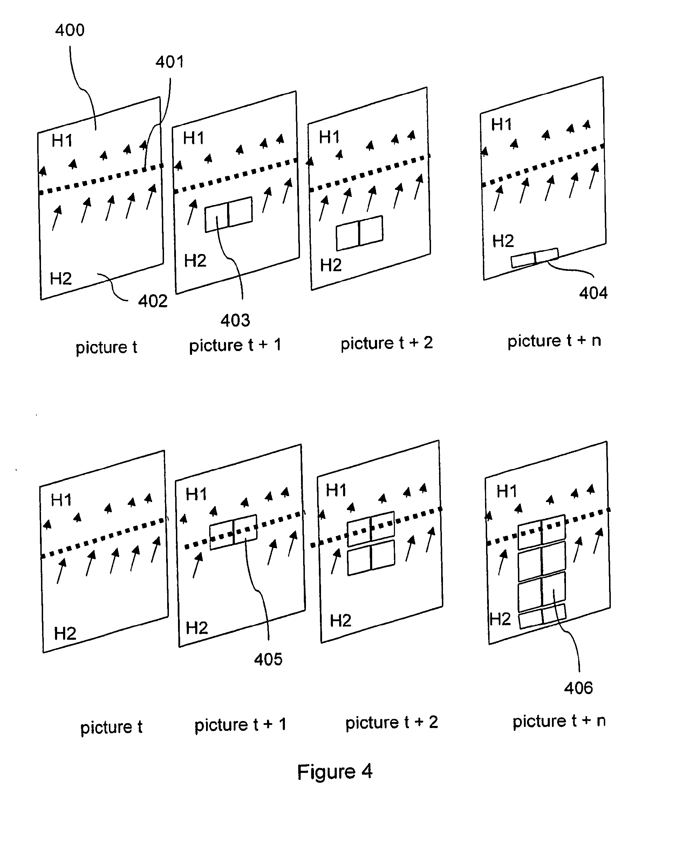

As disclosed with regard to figure 4, among the regions that are propagated, some have a much greater visual impact in the event of loss. If the picture t is segmented according to the motion vectors, there may exist various homogeneous motion regions. Let us take H1 400 and H2 402 as two homogeneous regions in terms of motions, the motion vectors belonging to a homogeneous region being identical. Let F 401 be the boundary between these two regions. If the lost and 'badly' corrected block 403 is situated entirely inside a homogeneous motion region, H1 400 or H2 402, the reconstruction error is not enlarged, or very little, in the homogeneous motion region H1 400 but moves at the same speed as the region until it practically disappears at time t + n 404, when this block leaves the picture or when an INTRA coding is used for this block. The reconstruction error therefore has only a little visual impact.

However, if the corrected region is situated at the boundary F 401 between the homogeneous regions in terms of motions H1 400 and H2 402, the reconstruction error 405 is propagated and risks growing along with the decoded pictures 406. This phenomenon is explained by three reasons:

- the error correction algorithm is not effective: the blocks situated on a motion boundary have thereby two distinct motion regions whereas the error correction algorithm attributes a single motion vector to a block. The reconstruction is therefore of poor quality at least on one of the two regions of the block;
- the reconstruction error on the boundary region persists: when the video is encoded, the video compression algorithm attributes a single vector to a block even if two single motions exist. At least one part of the block of the boundary at time (t+1) therefore points to the block of the boundary at time t. Because of this, if the block of the boundary is poorly corrected at time t, the error persists at time t+1, and

- the blocks adjacent to the boundary point to the boundary because of the motion.

In summary, we have a boundary region in terms of motion with:

- the blocks (at time t+n) situated on the motion boundary pointing to themselves (at time t+n-1);
- an ineffective error correction algorithm at the boundary, and
- adjacent blocks (at time t+n) that continue to point to the boundary at time (t+n-1).

These conditions explain the propagation phenomenon as illustrated on the picture t+n.

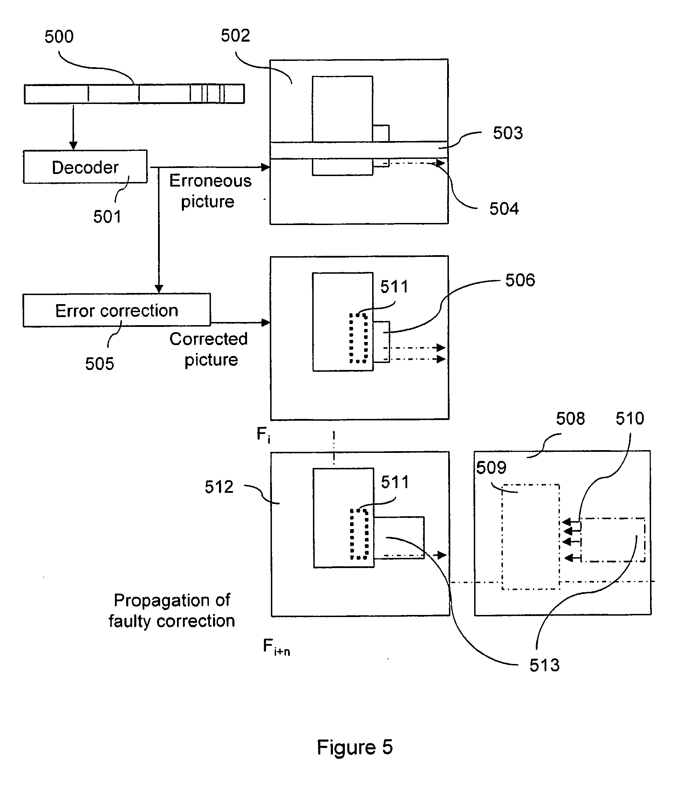

Figure 5 makes it possible to illustrate another example of error propagation on several pictures due to a poor correction on the reference picture. A vehicle 506, partly hidden by a wall 511, moves from left to right. The bitstream 500 represents the compressed video containing errors. The decoder 501 locates the missing parts of the picture and decodes the rest of the picture. The decoded picture Fi 502 contains lost regions 503. In this example, a uniform translation movement 504 from left to right characterizes the movement of the 'vehicle object'. As the wall 511 is assumed to be fixed in this example, the origin of this translation movement is situated in the region where the new textures of the vehicle 506 appear.

The missing regions are therefore corrected by the error correction module 505. The correction at 506 not being perfect, there exists an error that can be propagated to the following pictures depending on the current optical stream, that is to say the vector field. The schema 508 describes the configuration of the vector field prior to the creation of an error propagation source. At a time t, the vector field can be segmented into two regions: the fixed region 509, the motion vectors of which are zero, and the movable region 513, here the visible part of the vehicle 506, the motion vectors of which, issuing from the video encoding, are opposed to the actual movement direction. At the boundary between the vehicle 506 and the wall 511, certain blocks corresponding to the new textures in the 'overlap' region of the vehicle 506 are predicted on a part of the wall 511, by means of the motion vectors issuing from the video encoding 510. It will be recalled that an overlap region is a region in which the motion relating to a foreground element, here the vehicle, and a background element, here the wall, causes the appearance of the background element. The wall 511 being fixed, the motion vectors are zero for the blocks that describe it. A reconstruction error on the 'vehicle' region 513 therefore remains present at each picture until the next INTRA refreshing. Consequently, as this 'zero' movement region serves, over time, as a reference for other blocks, this error is propagated during the decoding of the following pictures of the video in the form of a drag in the direction of the movement of the vehicle.

Through the two examples described in figures 3, 4 and 5, two phenomena are found:

- imperfect reconstruction, and
- a break in motion homogeneity.

The same phenomenon could be observed for motions coming from the edges of the picture. In this case, there exists a boundary between a fixed region (the outside of the picture) and a motion region (inside the picture). The blocks inside are predicted on the external blocks ('padding' region used for the motion estimation).

In general terms, the regions of the picture having the characteristics of a vector field leading to the generation of artifacts are mainly the 'overlap' regions. An 'overlap' region is generally situated at the boundary between two homogeneous motion regions. At this point, new textures appear at each picture.

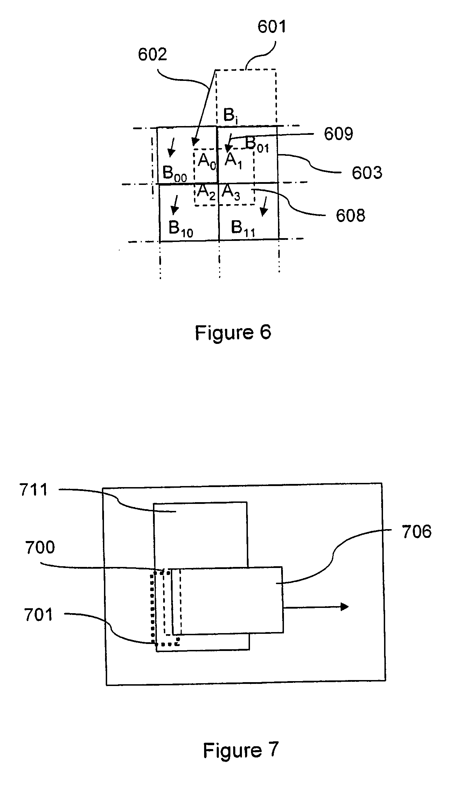

In the embodiment of the present invention described with regard to the figures, the detection of the potential sources of the generation of artifacts is based on an analysis of motion vectors of each block. This analysis consists of comparing the value of the motion vector of the current block with that of the block pointed to by the current vector. These sources are detected when the video is encoded, which makes it possible to limit any visual impact in the case of loss (for example by putting some of these blocks detected in INTRA mode) or to better protect these regions, as disclosed with regard to figures 6 to 10.

Figure 6 describes the main steps of detecting sources for which a transmission error would lead to large visual artifacts, despite the use of error correction. In the remainder of the description, they are referred to as 'sources of error propagation'. This detection of the 'sources of error propagation' takes place during the video encoding, corresponding to the block 101 in figure 1, using the motion vectors calculated by the video encoder.

Figure 6 depicts five blocks of one and the same picture resulting from a video encoding. The block Bi 601 represents the block on which the description is focused. With this block 601 there is associated a motion vector 602 resulting from the video encoding. This vector points to a region of the previous picture. During the video encoding process, it is this region that serves as a temporal prediction.

The sources of error propagation are detected in two main steps:

- a step of selecting the blocks whose estimated motion vector is non-zero, and
- a step of comparing the value of the vector pointed to with the vector associated with each block whose estimated motion vector is non-zero.

It should be noted that the vector pointed to is the vector associated with the block pointed to by the first vector. Unlike a traditional decoding scheme, the first vector points to a block of the same picture.

Thus the non-zero value of the motion vector associated with the current block is the first condition necessary for detection. This is because, if a block has a zero associated vector, this means that it is not predicted from any adjoining block. Consequently it will not be responsible for any error propagation. It is considered that the block Bi 601 has a non-zero estimated motion vector, denoted 602 in the figure.

The comparison step consists of detecting a motion break at the vector field obtained on encoding of the current picture. For each block selected, including the block Bi 601, a motion vector is associated. Although this vector is deemed to point to the previous picture in order to predict the block, it is considered here that this vector points in the current picture. The block Bi 601 is therefore used to point to a region 608 of the current picture. It is considered that this region 608 also has a motion vector. If the value of this motion vector is different from that of the block Bi 601, this indicates the presence of a break in motion. The block Bi 601 then risks being a source of error propagation.

For the comparison made, it is considered that a vector V1 is different from a vector V2 if a distance, in the mathematical meaning of the term, between the two ends of the vectors is greater than a predetermined value. In one embodiment, the distance considered is the maximum value of the absolute values of the differences between the X and Y components, that is to say, respectively, abs(V1x-V2x) or abs(V1y-V2y). This absolute value is thus compared with a predetermined limit value, or threshold, S whose determination is presented below.

The motion vector associated with the region 608 is determined, in the preferred embodiment of the method that is the object of the present invention, in the following manner, which constitutes a variant embodiment.

The majority of the time, this region 608 covers four blocks B00, B01, B10 and B11. The vector of the one from amongst these blocks whose surface common with the region 603 is greatest is chosen. In our example, among the common surfaces A0, A1, A2 and A3 we have A1 > A0 > A3 > A2. It is therefore the block B01, associated with the motion vector 609, that is pointed to by the vector associated with the block Bi 601. The comparison of the vectors is therefore made between the vector 609 associated with the chosen block B01 and the vector 602 associated with Bi.

In other variants, a calculation is made of a motion vector associated with the region 608 by the sum of the coordinates of the vectors associated with the overlapped blocks weighted by the respective standardized areas, as disclosed below.

It should also be noted that, when part of the block 608 is situated outside the picture, then the block 601 is automatically selected as the error source block.

The two-step algorithm described above makes it possible to detect the most important blocks. At the comparison step, two improvements can be made, to reduce the number of 'false detections'. It should be noted that a false detection is a block whose transmission error causes a weaker visual artifact than a true detection.

The first improvement concerns an integration of the state of each block on a series of pictures. To this end, a state 'Et' is defined for each block for a picture at time t. When the block has been detected as a probable error propagation source, the state Et is incremented by the value 1. Otherwise the state Et is equal to 0. Consequently this state Et represents, for a given block, the number of successive pictures for which the block has been detected as a probable propagation source. An integration of the states of each block coupled with a thresholding process, that is to say of comparison with a threshold value, makes it possible to eliminate 'false detections'. A block is selected if the state of the block exceeds a certain threshold N. This is because, if continuity of motion between two pictures is assumed, it is possible to consider that the configuration of the vector field of the propagation region (that is to say at the boundaries between two homogeneous regions) is constant from one picture to another.

The second improvement, more effective but requiring slightly greater calculation times, concerns the monitoring of the states for movable propagation sources. It is disclosed with regard to figures 7 to 9.

In the example in figure 5, the moving vehicle emerges behind a fixed wall. The two homogeneous regions are the wall 511 (which is fixed) and the vehicle 506 (in movement). Some blocks of the vehicle 506 are predicted from part of the wall. The error propagation source is therefore situated on this part of the wall and remains fixed during the entire sequence.

If another configuration is considered such that the vehicle 706 is placed in front of the wall 711, as in figure 7, the overlap region 700 is situated at the rear of the vehicle and reveals new textures of the wall at each picture. In this configuration, the region situated on the boundary between the wall and the vehicle moves with the vehicle. If this region is poorly reconstructed in a region 701, it moves at each picture with the vehicle and leaves a trail of artifacts on the side opposite to the direction of movement. In this example, the propagation source is mobile since it moves with the vehicle. It is therefore useful to establish a monitoring of the state of the blocks detected as a propagation source.

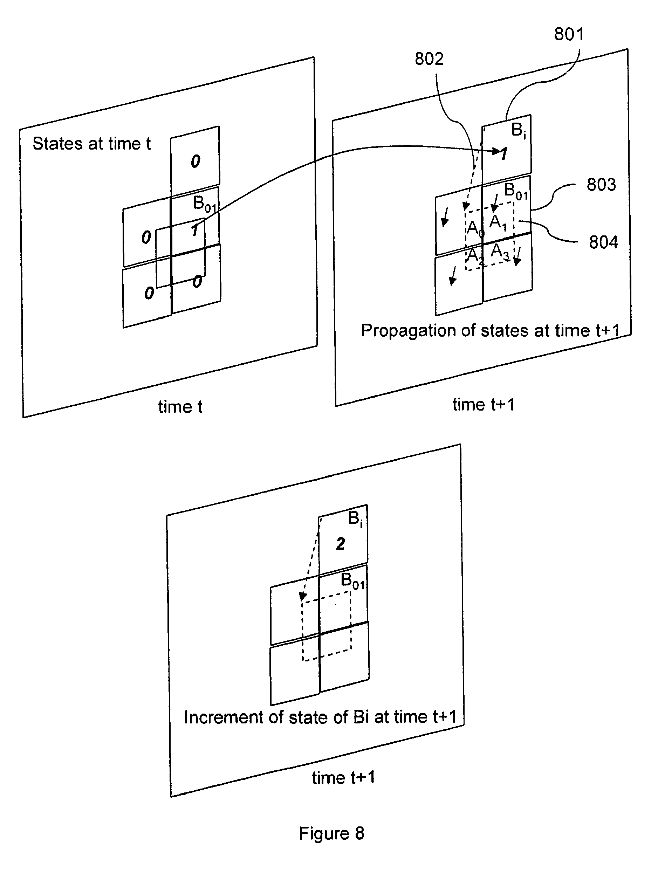

In order to be able to detect a mobile propagation source, a temporal monitoring of the states of each block is established according to the vector field. Figure 8 describes the steps of updating the states of the blocks at time t+1 according to the states at time t, that is to say from one picture to the following. It should be stated that, during the comparison step, the block pointed to by the vector 802 associated with the block Bi 801 is the block B01 803 since A1 is the maximum overlap surface 804. If the block B01 803 has been detected once as a probable source of propagation at time t, its state Et is equal to 1 (denoted 'Et(B01) = 1'). At time t+1, the state at time t of the pointed-to block B01 is propagated to the block Bi 801 ('Et+1(Bi) = Et(B01)'). Next, if the block Bi is detected as a propagation source, the state of the block Bi 801 is incremented ('Et+1(Bi) = Et+1(Bi) + 1'). At time t+1, the state of Bi 801 is therefore equal to 2 ('Et+1 (Bi) = 2'). If the block Bi is not detected as a propagation source, its state is reset to zero. This process allows the temporal monitoring of the states of each block. As for the first improvement disclosed above, only the blocks are selected for which the state Et is equal or greater to a predetermined value N.

It should be noted that, in variants, a combination of the two improvements detailed above is implemented. For example, at each iteration, the state issuing from the method that is the object of the first improvement is added to the state issuing from the method that is the object of the second improvement in order to form the value of the state to which an incrementation applies if the block is an error propagation source. This makes it possible to limit the risk of not selecting an overlap region.

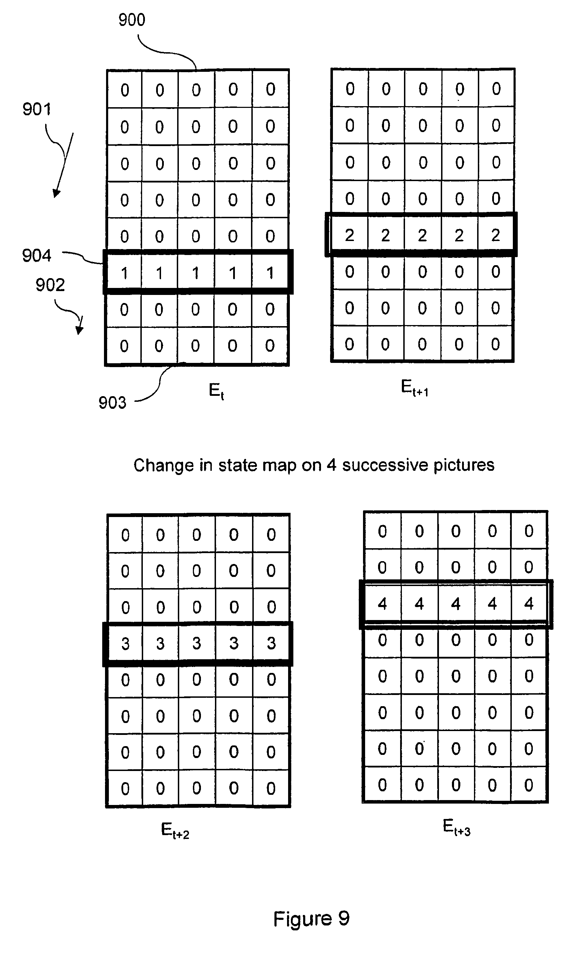

Figure 9 shows an example of change in the map of the states of the blocks due to movement of a propagation region 904 on four pictures. This region is situated at the boundary between a homogeneous region 900 of a strong global motion vector 901 and a homogeneous region 903 of a weak global motion vector 902. The states are incremented after propagation according to the state monitoring process described previously. A block is considered to be a potential source of error when the value of its state exceeds a threshold N. It is then coded in INTRA mode in order to eliminate any artifacts. It has been determined experimentally that a value of N equal to 5 makes it possible to limit the number of false alarms.

It should be noted, with regard to the description of figures 6 and 8, that the state associated with each block takes an integer value. However, it is also possible to work with real values during the monitoring of the state of the blocks. For example, in figure 8, the state of the block Bi is incremented by one unit. However, it is also possible to increment the value of 'Et' by taking into account the surfaces A0, A1, A2 and A3 (as in figure 6). In this case, the initial state is propagated by taking into account the initial state of the blocks B00, B01, B10 and B11 weighted according to the surfaces A0, A1, A2 and A3. The initial state is propagated using the following formula:

$$E_{t+1}(B_i) = \frac{A_0}{A} E_t(B_{00i}) + \frac{A_1}{A} E_t(B_{01i}) + \frac{A_2}{A} E_t(B_{10i}) + \frac{A_3}{A} E_t(B_{11i})$$

a formula in which $A_i$ represent the surface of the block i and A represents the surface of a block (the surface of the block B01 for example). Once this initial state is propagated, the current state is calculated, as described with regard to figure 6.

Figure 10 details steps of implementation of a particular embodiment of the method that is the object of the present invention. After reading the picture i, during a step 1000, the motion estimation is performed by the encoder during a step 1001. This estimation makes it possible to extract a vector field sampled in blocks, that is to say each block is associated with a vector. Next each block is run through during a loop commencing with step 1002 and finishing during a step 1011. If, during a step 1005, it is determined that the motion vector, which is called 'MV', of the current block 'BC' is zero, the block state counter is reset to zero during a step 1004. Otherwise the value of the vector pointed to, denoted 'MVp', is recovered, during a step 1013. It should be stated that the definition of the vector pointed to is given with regard to figure 3. In a preferred embodiment of the invention, as explained in figure 6, the vector pointed to is recovered from the picture currently being processed.

During steps 1006 to 1009, it is determined whether the current block, also referred to hereinafter as the 'first block', must be selected, according to:

- the motion vector associated with the block, referred to as the 'first vector', and
- a characteristic relating to the block, referred to as the 'second', of the same picture to which said first motion vector leads, from the first block.

During step 1006, it is determined whether the motion vectors of the first and second blocks are, between them, at a distance greater than a predetermined distance and/or whether the second block is, at least partially, outside the picture.

Thus the first vector, associated with the current block MV, is compared with the second vector, the vector pointed to MVp. Let S be the difference threshold. As described previously, the distance between the vectors is determined as the difference between the vectors on the components in x and y of the vectors MV and MVp by the formula max (abs(MVx-MVpx), abs(MVy-MVpy)). If this value is strictly greater than a limit value S, for example S = 2 pixels, it is considered that the two vectors are different.

When the difference between the vectors is less than the threshold S, the block is inside a homogeneous region in terms of motion and is not to be considered as a propagation source.

The blocks situated on the edges of the picture are processed in a special manner. This is because, when the region pointed to associated with the current block, that is to say the picture of the current block by the translation whose vector is the motion vector of the current block, is at least partially situated outside the picture, the test of difference between associated vector and vector of the block pointed to and the state monitoring using the second blocks becoming, for the following iteration, first blocks, cannot be applied. In this case, the fact that the region pointed to is situated at least partially outside the picture is a sufficient condition for defining this first block as a probable source of propagation. In a variant, it is the fact that the region pointed to is situated mainly outside the picture, in terms of surface area similar to what was disclosed with regard to figure 6, which serves as a selection criterion for the current block.

It should be stated here that, in coders of the MPEG type, each picture is augmented on its edges by an external region filled, for example, with pixels of a predetermined constant value. Nevertheless, other methods of filling the edge region can be applied. It is considered, by hypothesis, that any extrapolated block belonging to the edge region external to the picture has a zero associated motion vector.

In each case where the block is not considered to be a probable source of propagation, the state counter of the block 'BC' is reset to zero, during step 1004. Otherwise the state monitoring process described previously is performed during a step 1007 and the state counter is incremented during a step 1008. If the value of the counter is greater than the limit value N, which is determined during a step 1009, the block is considered to be a source of propagation or 'very important' block, during a step 1010. Otherwise the following block is passed to during a step 1011, if such remains. When the last block of the picture has been processed, the coding of the picture is carried out, during a step 1012, by coding at least one non-selected block with a first coding mode and coding at least one selected block with a second coding mode different from the first coding mode, as disclosed above.

Preferentially, during the step 1012 of coding each selected block, each selected block is encoded in a manner more robust to transmission errors than the non-selected blocks.

According to the embodiment, the second coding mode is an INTRA coding mode or an INTER coding mode associated with an error correcting code rate higher than the rate used in the first coding mode.

Following the coding step 1012, the process stops during a step 1013, until the following picture is ready to be processed by once again implementing the steps illustrated in figure 10.

In a variant, during step 1010, the selection of adjacent blocks is prevented with regard to coding in INTRA mode. Thus only a subset of the adjacent blocks are able to be selected if coded in INTRA mode. For example, this subset can correspond to the selection, in staggered fashion, of one block out of two, as on a checkerboard. In other variants, in order to limit the number of blocks coded in INTRA mode, a random drawing of the blocks in this subset is carried out, for example in order to select one block out of two which is then coded in INTRA mode. This is because coding all the blocks in the same region in INTRA on several pictures can greatly diminish the error correction methods based on the use of motion vectors. It is observed that the blocks eliminated by the prohibition on selecting adjacent blocks can, according to variants, be coded with a redundancy rate greater than that used for the blocks that had not initially been selected or be considered to be blocks that were not initially selected.

The algorithm for detecting the error propagation sources described in previous figures makes it possible to detect regions liable to generate artifacts in the event of loss and poor reconstruction of this region. Coupled with an error resilience method such as INTRA refreshing or an increase in protection against errors on the packets concerned, it makes it possible to reduce or stop the extent of the propagation. Two applications are proposed below:

In the first application, a coding without notification of packet loss is carried out. At the coding 101 (figure 1), the source detection is applied for all the pictures. When a potential error propagation region is detected, the end blocks of this region are marked. If it is assumed that the limit number of blocks coded in INTRA is equal to M (M cannot be too great for reasons of efficacy of compression), the blocks detected as sources are first of all coded in INTRA. Next the M-n INTRA modes remaining are distributed in a random manner on the other blocks. If the number of source blocks is greater than the number M, the blocks having the greatest vector difference (see step 1006) are as a priority coded in INTRA. In this first application, the complete covering of complete regions of the same picture with INTRA blocks is avoided. For this purpose, a checkerboard eliminating, in staggered fashion, one block out of two that would have been selected is for example applied, which makes it possible to limit the number of blocks coded in INTRA. This is because it is important not to use only INTRA mode since no motion vector is transmitted for an INTRA block. In the case of packet loss, the error correction might be less effective since few motion vectors would be available for the error correction module.

In the second application, a coding is carried out with notification of packet loss. On coding, the detection of a source of major errors is applied for all the pictures. When a region is detected, the INTRA refreshing is applied to this region only if associated packet losses are indicated to the coder and the number M of blocks able to be coded in INTRA mode so permits. In this case, during the coding step 1012, a block selected with the second coding mode is coded only if said block is indicated as at least partially lost by a decoder. This application makes it possible to reduce the number of blocks coded in INTRA in the case of a very limited value of M. As before, it will however be ensured that not all the blocks in INTRA mode are covered.

**Claims**

1.  A video coding method, comprising:

    - a step (1001) of determining a motion vector (301, 302, 304, 305, 602, 609) for each of a plurality of blocks (601, 801) of a picture from a reference picture,
    - a step (1006 to 1010) of selecting at least one first block in said plurality of blocks, according to the difference between a first motion vector and a second motion vector, wherein:
    - the first motion vector is the motion vector associated with said first block, and
    - the second motion vector is a motion vector relating to a second block, which second block is located in the same picture as the first block at a position relative to the first block determined by the first motion vector,
    - a step (1012) of coding at least one non-selected block with a first coding mode, and
    - a step (1012) of coding at least one first selected block with a second coding mode different from the first coding mode.

2.  A method according to claim 1, in which, during the selection step (1006 to 1010), the first block is selected if the first motion vector and the second motion vector differ by a distance greater than a predetermined value.

3.  A method according to claim 2, in which, during the selection step (1006 to 1010), a first block is selected if at least one absolute value of the differences between the components of the first and second vectors is greater than said predetermined value.

4.  A method according to any of claims 1 to 3, in which the second motion vector is determined as being the previously determined vector associated with the block of the picture whose surface common with the second block is the greatest.

5.  A method to according to any one of claims 1 to 4, **characterized in that**, during the step (1012) of coding each block selected, each selected block is encoded in a manner more robust to transmission errors than the non-selected blocks.

6.  A method according to any one of claims 1 to 5, **characterized in that** the second coding mode is an INTRA coding mode.

7.  A method according to claim 6, **characterized in that**, during the selection step (1006 to 1010), the selection of adjacent blocks is prevented.

8.  A method according to any one of claims 1 to 5, **characterized in that** the second coding mode is an INTER coding mode associated with an error correcting code rate greater than the rate used in the first coding mode.

9.  A method according to any one of claims 1 to 8, in which, during the selection step (1006 to 1010), only a number of blocks less than a predetermined limit value is selected, according to a criterion depending on the first and second vectors.

10. A method according to any one of claims 1 to 9, in which, during the coding step (1012), a selected block is coded with the second coding mode only if said block is indicated as being at least partially lost by a decoder.

11. A video coding device (210), comprising:

    - a means of determining a motion vector (301, 302, 304, 305, 602, 609) for each of a plurality of blocks (601, 801) of a picture from a reference picture,

- a means of selecting at least one first block in said plurality of blocks, according to the difference between a first motion vector and a second motion vector, wherein:

- the first motion vector is the motion vector associated with said first block, and
- the second motion vector is a motion vector relating to a second block, which second block is located in the same picture as the first block at a position relative to the first block determined by the first motion vector,

- a means of coding at least one non-selected block with a first coding mode, and
- a means of coding at least one first selected block with a second coding mode different from the first coding mode.

12. A computer program that can be loaded into a computer system, said program containing instructions for implementing the coding method according to any one of claims 1 to 10.

13. An information carrier (205, 208) that can be read by a computer or a microprocessor, removable or not, storing instructions of a computer program, **characterized in that** it allows the implementation of the coding method according to any one of claims 1 to 10.

**Patentansprüche**

1. Videocodierungsverfahren mit:

- einem Schritt (1001) zum Bestimmen eines Bewegungsvektors (301, 302, 304, 305, 602, 609) für jeden einer Mehrzahl von Blöcken (601, 801) eines Bildes aus einem Referenzbild,
- einem Schritt (1006 bis 1010) zum Auswählen zumindest eines ersten Blocks der Mehrzahl von Blöcken entsprechend der Differenz zwischen einem ersten Bewegungsvektor und einem zweiten Bewegungsvektor, wobei:

- der erste Bewegungsvektor der dem ersten Block zugehörige Bewegungsvektor ist, und
- der zweite Bewegungsvektor ein einen zweiten Block betreffender Bewegungsvektor ist, wobei sich der zweite Block im gleichen Bild wie der erste Block an einer Position relativ zum durch den ersten Bewegungsvektor bestimmten ersten Block befindet,

- einem Schritt (1012) zum Codieren zumindest eines nichtausgewählten Blocks nach einem ersten Codierungsmodus, und
- einem Schritt (1012) zum Codieren zumindest eines ersten ausgewählten Blocks nach einem vom ersten Codierungsmodus verschiedenen zweiten Codierungsmodus.

2. Verfahren nach Anspruch 1, **dadurch gekennzeichnet, dass** während des Auswahlschritts (1006 bis 1010) der erste Block ausgewählt wird, wenn sich der erste Bewegungsvektor und der zweite Bewegungsvektor mit einem Abstand größer als ein vorgegebener Wert voneinander unterscheiden.

3. Verfahren nach Anspruch 2, **dadurch gekennzeichnet, dass** während des Auswahlschritts (1006 bis 1010) ein erster Block ausgewählt wird, wenn zumindest ein Absolutwert der Differenzen zwischen den Komponenten des ersten und zweiten Vektors größer als der vorgegebene Wert ist.

4. Verfahren nach einem der Ansprüche 1 bis 3, **dadurch gekennzeichnet, dass** der zweite Bewegungsvektor als der vorher zum Block des Bildes zugehörige Vektor bestimmt wird, bei dem die gemeinsame Oberfläche des zugehörigen Blocks mit dem zweiten Block die größte ist.

5. Verfahren nach einem der Ansprüche 1 bis 4, **dadurch gekennzeichnet, dass** während des Schritts des Codierens (1012) jedes ausgewählten Blocks jeder ausgewählte Block in einer in Bezug auf Übermittlungsfehler robusteren Weise als die nichtausgewählten Blöcke codiert wird.

6. Verfahren nach einem der Ansprüche 1 bis 5, **dadurch gekennzeichnet, dass** der zweite Codierungsmodus ein INTRA-Codierungsmodus ist.

7. Verfahren nach Anspruch 6, **dadurch gekennzeichnet, dass** während des Auswahlschritts (1006 bis 1010) die Auswahl benachbarter Blöcke verhindert wird.

8. Verfahren nach einem der Ansprüche 1 bis 5, **dadurch gekennzeichnet, dass** der zweite Codierungsmodus ein INTER-Codierungsmodus mit einer zugehörigen Fehlerkorrekturcodierungsrate von mehr als der beim ersten Codierungsmodus verwendeten Rate ist.

9. Verfahren nach einem der Ansprüche 1 bis 8, **dadurch gekennzeichnet, dass** während des Auswahlschritts (1006 bis 1010) nur eine Anzahl von Blöcken kleiner als ein vorgegebener Grenzwert nach einem vorgegebenen Kriterium abhängig von dem ersten und zweiten Vektor ausgewählt wird.

10. Verfahren nach einem der Ansprüche 1 bis 9, **dadurch gekennzeichnet, dass** während des Codierungsschritts (1012) ein ausgewählter Block nach dem zweiten Codierungsmodus nur codiert wird, wenn der Block als durch den Decodierer zumindest teilweise Verloren angezeigt wird.

11. Videocodierungsvorrichtung (210) mit:

- einem Mittel zum Bestimmen eines Bewegungsvektors (301, 302, 304, 305, 602, 609) für jeden einer Mehrzahl von Blöcken (601, 801) eines Bildes aus einem Referenzbild,
- einem Mittel zum Auswählen zumindest eines ersten Blocks aus der Mehrzahl der Blöcke gemäß dem Unterschied zwischen einem ersten Bewegungsvektor und einem zweiten Bewegungsvektor, wobei:

- der erste Bewegungsvektor der dem ersten Block zugehörige Bewegungsvektor ist, und
- der zweite Bewegungsvektor ein Bewegungsvektor bezüglich eines zweiten Blocks ist, wobei sich der zweite Block im gleichen Bild wie der erste Block an einer durch den ersten Bewegungsvektor relativ zum ersten Block bestimmten Position befindet,

- ein Mittel zum Codieren zumindest eines nichtausgewählten Blocks nach einem ersten Codierungsmodus, und
- ein Mittel zum Codieren zumindest eines ersten ausgewählten Blocks nach einem zweiten zum ersten Codierungsmodus unterschiedlichen Codierungsmodus.

12. Rechnerprogramm, das in ein Rechnersystem geladen werden kann, wobei das Programm Anweisungen zum Implementieren des Codierungsverfahrens nach einem der Ansprüche 1 bis 10 enthält.

13. Informationsträger (205, 208) entfernbar oder nicht, der durch einen Rechner oder einen Mikroprozessor gelesen werden kann, der Anweisungen eines Rechnerprogramms speichert, **dadurch gekennzeichnet, dass** es die Implementierung des Codierungsverfahrens nach einem der Ansprüche 1 bis 10 erlaubt.

**Revendications**

1. Procédé de codage vidéo comprenant :

- une étape de détermination (1001) d'un vecteur de mouvement (301, 302, 304, 305, 602, 609) pour chacun d'une pluralité de blocs (601, 801) d'une image par rapport à une image de référence ;
- une étape de sélection (1006 à 1010) d'au moins un premier bloc dans ladite pluralité de blocs, en fonction de la différence entre un premier vecteur de mouvement et un deuxième vecteur de mouvement,
- le premier vecteur de mouvement étant le vecteur de mouvement associé audit premier bloc, et
- le deuxième vecteur de mouvement étant un vecteur de mouvement relatif à un deuxième bloc, lequel deuxième bloc est situé dans la même image que le premier bloc à une position par rapport au premier bloc déterminée par le premier vecteur de mouvement ;
- une étape de codage (1012) d'au moins un bloc non sélectionné à l'aide d'un premier mode de codage ; et
- une étape de codage (1012) d'au moins un premier bloc sélectionné à l'aide d'un second mode de codage différent du premier mode de codage.

2. Procédé selon la revendication 1, dans lequel, durant l'étape de sélection (1006 à 1010), le premier bloc est sélectionné si le premier vecteur de mouvement et le deuxième vecteur de mouvement diffèrent d'une distance supérieure à une valeur prédéterminée.

3. Procédé selon la revendication 2, dans lequel, durant l'étape de sélection (1006 à 1010), un premier bloc est sélectionné si au moins une valeur absolue de la différence entre les composantes des premier et deuxième vecteurs est supérieure à une ladite valeur prédéterminée.

4. Procédé selon l'une quelconque des revendications 1 à 3, dans lequel le deuxième vecteur de mouvement est déterminé comme étant le vecteur déterminé antérieurement associé au bloc de l'image dont la surface commune avec le deuxième bloc est la plus grande.

5. Procédé selon l'une quelconque des revendications 1 à 4, **caractérisé en ce que**, durant l'étape (1012) de codage de chaque bloc sélectionné, chaque bloc sélectionné est codé d'une manière plus résistante aux erreurs de transmission que les blocs non sélectionnés.

6. Procédé selon l'une quelconque des revendications 1 à 5, **caractérisé en ce que** le second mode de codage est un mode de codage intra-image.

7. Procédé selon la revendication 6, **caractérisé en ce que**, durant l'étape de sélection (1006 à 1010), la sélection de blocs adjacents est empêchée.

8. Procédé selon l'une quelconque des revendications 1 à 5, **caractérisé en ce que** le second mode de codage est un mode de codage inter-image associé à un taux de code de correction d'erreurs supérieur au taux utilisé dans le premier mode de codage.

9. Procédé selon l'une quelconque des revendications 1 à 8, dans lequel, durant l'étape de sélection (1006 à 1010), seulement un nombre de blocs inférieure à une valeur limite prédéterminée est sélectionné, selon un critère dépendant des premier et deuxième vecteurs.

10. Procédé selon l'une quelconque des revendications 1 à 9, dans lequel, durant l'étape de codage (1012), un bloc sélectionné est codé à l'aide du second mode de codage seulement si ledit bloc est indiqué par un décodeur comme étant au moins partiellement perdu.

11. Dispositif (210) de vidéocodage comprenant :

- un moyen de détermination d'un vecteur de mouvement (301, 302, 304, 305, 602, 609) pour chacun d'une pluralité de blocs (601, 801) d'une image par rapport à une image de référence ;
- un moyen de sélection d'au moins un premier bloc dans ladite pluralité de blocs, en fonction de la différence entre un premier vecteur de mouvement et un deuxième vecteur de mouvement,
- le premier vecteur de mouvement étant le vecteur de mouvement associé audit premier bloc, et
- le deuxième vecteur de mouvement étant un vecteur de mouvement relatif à un deuxième bloc, lequel deuxième bloc est situé dans la même image que le premier bloc à une position par rapport au premier bloc déterminée par le premier vecteur de mouvement ;
- un moyen de codage d'au moins un bloc non sélectionné à l'aide d'un premier mode de codage ; et
- un moyen de codage d'au moins un premier bloc sélectionné à l'aide d'un second mode de codage différent du premier mode de codage.

12. Programme informatique qui peut être chargé dans un système informatique, ledit programme contenant des instructions pour mettre en oeuvre le procédé de codage selon l'une quelconque des revendications 1 à 10.

13. Support (205, 208) d'information qui peut être lu par un ordinateur ou un microprocesseur, amovible ou non, mémorisant des instructions d'un programme informatique, **caractérisé en ce qu'**il permet la mise en oeuvre du procédé de codage selon l'une quelconque des revendications 1 à 10.

Figure 1

Figure 2

picture t                    picture t + 1

picture t + 2               picture t + n

Figure 3

Figure 4

Figure 5

Figure 6

Figure 7

States at time t

*0*

B$_{01}$

*0* *1*

*0* *0*

time t

801

802

B$_i$

*1*

B$_{01}$

A$_0$ A$_1$

A$_2$ A$_3$

803

804

Propagation of states at time t+1

time t+1

B$_i$

**2**

B$_{01}$

Increment of state of Bi at time t+1

time t+1

Figure 8

Change in state map on 4 successive pictures

Figure 9

1000 — Reading of picture

1001 — Motion estimation

1002 — Reading of block

Cpt = 0 — 1004

1005 — MV=0 ?

No

Yes

1013 — Recovery of vector pointed to

1006 — abs(MV-MV$_p$) > S or block pointed to outside the picture ?

No

Yes

State monitoring — 1007

Cpt ++ — 1008

1009 — Cpt > N ?

Yes

No

Error source — 1010

No

End of blocks ? — 1011

Yes

Coding — 1012

End — 1013

Figure 10

**EP 2 137 978 B1**

## REFERENCES CITED IN THE DESCRIPTION

### Patent documents cited in the description

- EP 1583369 A